# EUROPÄISCHE PATENTSCHRIFT

(11) **EP 2 116 734 B1**
(45) Veröffentlichungstag und Bekanntmachung des Hinweises auf die Patenterteilung: **30.09.2015**
(21) Anmeldenummer: 09005495.8
(22) Anmeldetag: 18.04.2009
(51) Int. Cl.: F16D 25/10, F16D 25/0638

(54) **Doppelkupplung**
Double clutch
Couplage double

(30) Priorität: 07.05.2008 DE 102008022525
(43) Veröffentlichungstag der Anmeldung: 11.11.2009
(73) Patentinhaber: Volkswagen Aktiengesellschaft, 38440 Wolfsburg (DE)
(72) Erfinder: Kolze, Fabian, 39179 Barleben (DE); Albrecht, Edmund, 38527 Meine (DE); Plogmann, Jörg, 34560 Fritzlar (DE); Schmidt, Andreas, 32602 Vlotho (DE)

(56) Entgegenhaltungen:
- EP-A1- 1 612 444
- EP-A1- 1 729 025
- WO-A1-2006/132290
- DE-A1-102007 009 964
- US-B1- 6 382 382

## Beschreibung

Die Erfindung betrifft eine Doppelkupplung, insbesondere für ein automatisches oder automatisiertes Doppelkupplungsgetriebe, mit einer Hauptnabe sowie mit einer ersten Reibkupplung und einer zweiten Reibkupplung, wobei die beiden Reibkupplungen einerseits mit einer Motorwelle und andererseits jeweils mit einer Getriebeeingangswelle verbindbar oder verbunden sind, wobei den beiden Reibkupplungen jeweils ein Betätigungskolben zugeordnet ist und die Betätigungskolben mit ihren radial innenliegenden Fußbereichen entlang jeweils einer Dichtungslauffläche axial verschiebbar sind und den Betätigungskolben jeweils einerseits ein Arbeitsraum und andererseits ein Druckausgleichsraum zugeordnet ist, wobei der der zweiten Reibkupplung zugeordnete Druckausgleichsraum zumindest teilweise durch einen Ausgleichskolben begrenzt ist.

Doppelkupplungen, insbesondere Doppelkupplungen für Doppelkupplungsgetriebe, teilen das zu übertragende Drehmoment auf, vzw. auf zwei verschiedene Getriebeeingangswellen eines automatischen oder automatisierten Doppelkupplungsgetriebes. Die vzw. mit der ersten Getriebeeingangswelle verbindbare, erste Reibkupplung ist im Allgemeinen die thermisch höher belastete Reibkupplung, da diese während des Anfahrens die hier besonders entstehende Wärme abführen muss. Die erste Reibkupplung ist vzw. relativ zur zweiten Reibkupplung radial außenliegend angeordnet, insbesondere um die beim Anfahren entstehende Wärme besser abführen zu können. Aus der EP 1 612 444 A1 und der EP 1 729 025 A1 ist jeweils eine Doppelkupplung mit einer radial äußeren Reibkupplung und mit einer radial inneren Reibkupplung bekannt. Aus der DE 34 32 403 C2 ist eine Doppelkupplung mit zwei axial nebeneinander angeordneten Reibkupplungen bekannt.

Der Kraftfluss von der Motorwelle wird vzw. über ein Gehäuse und eine mit dem Gehäuse drehfest in Wirkverbindung stehende Hauptnabe übertragen. Das Gehäuse kann eine mit der Motorwelle drehfest verbundene Mitnehmerscheibe und einen wiederum mit der Mitnehmerscheibe drehfest in Verbindung stehenden, ersten Außenlamellenträger aufweisen,
wobei der erste Außenlamellenträger der ersten Reibkupplung zugeordnet ist und insbesondere mit der Hauptnabe verschweißt ist. Um das Drehmoment auf die zweite Reibkupplung übertragen zu können, weist die Doppelkupplung einen zweiten Außenlamellenträger auf, wobei der zweite Außenlamellenträger ebenfalls mit der Hauptnabe verschweißt ist. Der Kraftfluss wird vzw. von der Motorwelle über das Gehäuse und die Hauptnabe zum zweiten Außenlamellenträger übertragen. Zur Montage des zweiten Außenlamellenträgers kann die Hauptnabe einen zylindrischen Außenumfangsabschnitt aufweisen, auf den der zweite Außenlamellenträger aufgeschoben wird und anschließend verschweißt wird. Um eine kompaktbauende Doppelkupplung bereit zu stellen, ist der Fügedurchmesser des zweiten Außenlamellenträgers und entsprechend der Durchmesser der Hauptnabe am Außenumfangsabschnitt vzw. gering. Der radiale Freiraum in der Umgebung der Schweißnaht ist durch die Hauptnabe begrenzt. Die Schweißnahtposition an der Hauptnabe ist daher auch mit einem Schweißlaser nur aufwendig zu erreichen. Die Schweißnahtumgebung kann nur unter großem Arbeits- und Zeitaufwand gebürstet, d. h. gereinigt werden.

Ferner ist die Doppelkupplung vzw. hydraulisch betätigbar, wodurch verschiedene Funktionsflächen an der Hauptnabe beim Schweißen geschützt werden müssen. Um die erste Reibkupplung hydraulisch betätigen zu können, ist ein erster Betätigungskolben auf der Hauptnabe axial verschiebbar geführt. Zum Betätigen der zweiten Reibkupplung ist ein zweiter Betätigungskolben ebenfalls axial verschiebbar angeordnet. Die beiden Betätigungskolben sind dabei jeweils mit ihrem radial innersten Fußbereich an den Dichtungslaufflächen axial verschiebbar abgestützt. Um die beiden Betätigungskolben verschieben zu können, ist jedem Betätigungskolben einerseits ein Arbeitsraum und andererseits ein Druckausgleichsraum zugeordnet. Die Arbeitsräume sind zum Schließen der Reibkupplung mit einem Druckmittel, vzw. Öl, beaufschlagbar. In den Druckausgleichsräumen können Federanordnungen am Betätigungskolben abgestützt sein, um die Betätigungskolben wieder in die Gegenrichtung zu schieben und die jeweilige Reibkupplung zu öffnen. Der zweite Außenlamellenträger kann dabei insbesondere den Druckausgleichsraum der ersten Reibkupplung und den Arbeitsraum der zweiten Reibkupplung begrenzen. Der zweite Außenlamellenträger ist dann in Axialrichtung zwischen dem ersten Betätigungskolben und dem zweiten Betätigungskolben an der Hauptnabe angeschweißt. Beim Verschweißen des zweiten Außenlamellenträgers an der Hauptnabe müssen die den Betätigungskolben zugeordneten Dichtungslaufflächen als Funktionsflächen abgedeckt bzw. geschützt werden, um eine Beschädigung oder Verschmutzung der benachbarten Dichtungslaufflächen zu vermeiden. Hierdurch ist der Arbeits-und Montageaufwand bei den im Stand der Technik bekannten Doppelkupplungen relativ hoch. Der Außenumfangsabschnitt, an dem der zweite Außenlamellenträger an der Hauptnabe angeschweißt ist, kann insbesondere bei einer kompakten Bauweise der Doppelkupplung nur einen geringen axialen Abstand zu den Funktionsflächen aufweisen, wodurch ein Schutz der benachbarten Funktionsflächen beim Verschweißen des zweiten Außenlamellenträgers sich manchmal problematisch, insbesondere aber sehr arbeits- und damit kostenaufwendig, gestalten kann.

Aus der US 6,382,382 B1 ist eine gattungsgemäße Doppelkupplungsanordnung bekannt, bei der sich ein Betätigungskolben gegen die Kraft einer Rückstellfeder relativ zu einem weiteren Kupplungselement bewegt. Das weitere Kupplungselement ist mit einem Sicherungsring starr auf einer Hauptnabe festgelegt.

Der Erfindung liegt daher die Aufgabe zugrunde, eine eingangs genannte Doppelkupplung derart auszugestalten und weiterzubilden, so dass die Doppelkupplung einfacher montierbar ist, insbesondere entsprechende Funktionsflächen beim Schweißen geschützt sind und der damit verbundene Arbeits- und Montageaufwand verringert ist.

Die zuvor aufgezeigte Aufgabe wird nun für die eingangs genannte Doppelkupplung dadurch gelöst, dass der Ausgleichskolben einen sich in axialer Richtung erstreckenden Axialbereich aufweist, wobei der Axialbereich die Dichtungslauffläche für den Fußbereich des Betätigungskolben der zweiten Reibkupplung aufweist. Dadurch ist der - zweite - Betätigungskolben - nicht an der Hauptnabe - sondern mit seinem radial innersten Fußbereich am Ausgleichskolben abgestützt. Dies hat den Vorteil, dass die Hauptnabe nahe dem Schweißnahtbereich des zweiten Außenlamellenträgers endend ausführbar ist, da die Hauptnabe nicht mehr die Dichtungslauffläche für den Betätigungskolben der zweiten Reibkupplung bereitstellen muss. Die Dichtung des zweiten Betätigungskolbens der zweiten Reibkupplung ist nun auf dem vzw. zylindrischen, tiefgezogenen Axialbereich des Ausgleichskolbens verfahrbar, wobei der Ausgleichskolben vzw. als Blechteil ausgebildet ist. Da die Dichtungslauffläche nun dem Ausgleichskolben zugeordnet ist, muss dieses separate Bauteil bei der Montage nicht abgedeckt werden, da die noch nicht montierten Bauteile vor Verschmutzung und Beschädigung beim Schweißvorgang geschützt sind. Ein weiterer Vorteil ist, dass durch die axial kurzbauende Hauptnabe dieser Endbereich zum Schweißen gut zugänglich ist. Ebenfalls vereinfacht sich durch den motorseitig des zweiten Außenlamellenträgers hinausragenden Endstummel der Hauptnabe das Bürsten der Schweißnahtumgebung. Da die Hauptnabe mit einem kurzen Endbereich bzw. Endstummel ausgeführt ist, wird ferner Material eingespart. Des Weiteren ist der Bohraufwand für die Druckmittelleitungen reduziert, da hier nur kurze Druckmittelleitungen zur Beaufschlagung des zweiten Arbeitsraumes zur Verfügung gestellt werden müssen. Der Bohraufwand für die Druckmittelleitungen in der Hauptnabe ist daher reduziert. Am Endbereich der Hauptnabe ist der Ausgleichskolben angeschweißt und entsprechende Druckmittelaustrittsöffnungen sind für den zweiten Arbeitsraum angeordnet. Ein weiterer Vorteil der. Erfindung ist, dass die Schweißnahtposition des zweiten Außenlamellenträgers hier axial gut erreichbar ist. Die eingangs beschriebenen Nachteile sind daher vermieden und entsprechende Vorteile erzielt. Es gibt nun eine Vielzahl von Möglichkeiten, die erfindungsgemäße Doppelkupplung in vorteilhafter Art und Weise auszugestalten und weiterzubilden. Hierfür darf zunächst auf die dem Patentanspruch 1 nachgeordneten Patentansprüche verwiesen werden. Im Folgenden wird nun eine bevorzugte Ausgestaltung der Erfindung anhand der Zeichnung und der dazugehörigen Beschreibung näher erläutert. In der Zeichnung zeigt:
- Fig. 1: in einer schematischen, geschnittenen, perspektivischen Darstellung die Doppelkupplung im Wesentlichen hälftig dargestellt in einer ersten Ausführungsform,
- Fig. 2: in einer geschnittenen Detaildarstellung die Doppelkupplung aus Fig. 1,
- Fig. 3: in einer weiteren geschnittenen Detaildarstellung die Doppelkupplung aus Fig. 1 und Fig. 2, und
- Fig. 4: in einer geschnittenen Detaildarstellung eine weitere, nicht erfindungsgemäße Ausführungsform einer Doppelkupplung.

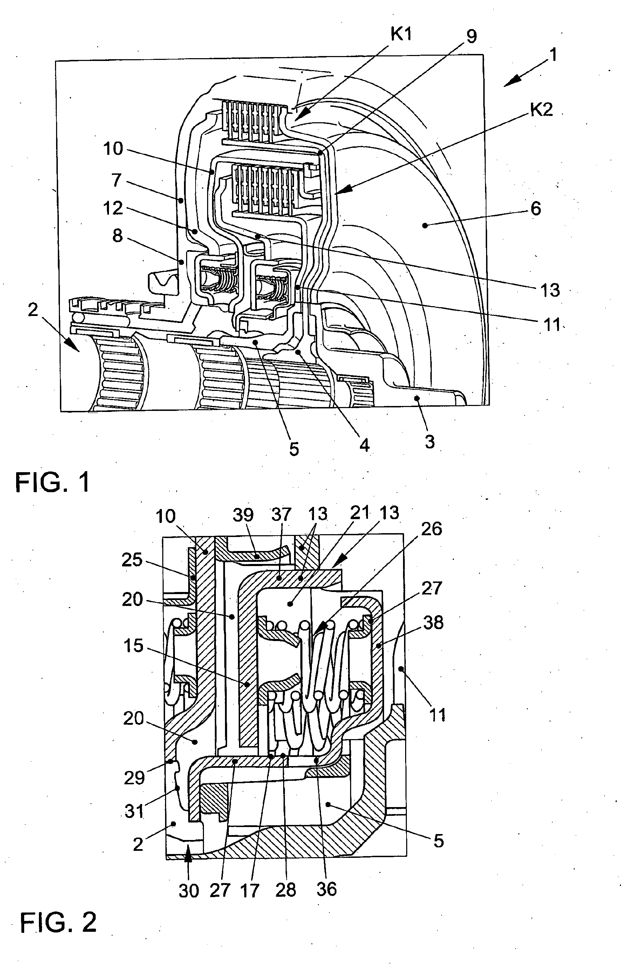

Die in Fig. 1 dargestellte Doppelkupplung 1 wird insbesondere für ein nicht dargestelltes Getriebe eines Kraftfahrzeuges verwendet, nämlich vzw. für ein automatisches oder automatisiertes, hier allerdings nicht im Einzelnen dargestelltes Doppelkupplungsgetriebe.

Gut ersichtlich ist eine Hauptnabe 2. Die Doppelkupplung 1 weist ferner zwei Reibkupplungen auf, nämlich eine erste Reibkupplung K1 und eine zweite Reibkupplung K2, wobei die Bezeichnung "erste" und "zweite" Reibkupplung hier nicht einschränkend gemeint ist. Die beiden Reibkupplungen K1 und K2 sind mit einer nicht im Einzelnen dargestellten Motorwelle verbindbar. Teilweise ist in Fig. 1 rechts unten eine Kupplungseingangswelle 3 erkennbar, die bspw. mit der nicht im Einzelnen dargestellten Motorwelle verbindbar ist. Andererseits sind die erste und die zweite Reibkupplung K1 und K2 mit jeweils einer Getriebeeingangswelle eines Doppelkupplungsgetriebes verbindbar. Dargestellt sind in Fig. 1 die entsprechenden Verbindungselemente 4 und 5 der ersten Getriebeeingangswelle und der zweiten Getriebeeingangswelle. Die Hauptnabe 2 ist vzw. hohl ausgebildet, um die Getriebeeingangswellen entsprechend in der Hauptnabe 2 konzentrisch zueinander anordnen zu können.

Zur Kraft- bzw. Drehmomentübertragung ist die Kupplungseinganswelle 3 drehfest mit einer Mitnehmerscheibe 6 verbunden. Mit der Mitnehmerscheibe 6 ist ein erster Außenlamellenträger 7 drehfest verbunden. Der erste Außenlamellenträger 7 ist an der Hauptnabe 2 befestigt, nämlich hier angeschweißt. Die Hauptnabe 2 weist dazu einen, insbesondere einstückig ausgebildeten, Kragen 8 auf, wobei am Außenumfang dieses Kragens 8 der erste Außenlamellenträger 7 verschweißt ist.

Der erste Außenlamellenträger 7 und die Mitnehmerscheibe 6 bilden ein nicht näher bezeichnetes Gehäuse der Doppelkupplung 1. Der erste Außenlamellenträger 7 trägt nicht näher bezeichnete Außenlamellen der ersten Reibkupplung K1. Die Außenlamellen der ersten Reibkupplung K1 sind jeweils abwechselnd mit nicht näher bezeichneten, der ersten Reibkupplung K1 zugeordneten Innenlamellen zu Lamellenpaketen geschichtet. Die Innenlamellen sind wiederum funktional wirksam über einen ersten Innenlamellenträger 9 mit dem Verbindungselement 4 der ersten Getriebeeingangswelle verbunden.

Die zweite Reibkupplung K2 ist vzw. radial innerhalb der ersten Reibkupplung K1 angeordnet. Zur Drehmomentübertragung auf die zweite Reibkupplung K2 ist das Drehmoment von der Kupplungseingangswelle 3 über das Gehäuse, weiter über die Hauptnabe 2 zu einem an der Hauptnabe 2 befestigten, zweiten Außenlamellenträger 10 übertragbar. Der zweite Außenlamellenträger 10 ist mit der Hauptnabe 2 verschweißt. Der zweite Außenlamellenträger 10 trägt nicht näher bezeichnete Außenlamellen, die mit nicht näher bezeichneten Innenlamellen zu Lamellenpaketen geschichtet sind. Die Innenlamellen der zweiten Reibkupplung K2 sind mit einem zweiten Innenlamellenträger 11 funktional wirksam drehfest verbunden. Der zweite Innenlamellenträger 11 ist funktional wirksam mit dem Verbindungselement 5 der zweiten Getriebeeingangswelle verbunden.

Die beiden Reibkupplungen K1 und K2 werden von einer nicht dargestellten Mechatronik, abhängig von dem zu schaltenden Gang geregelt, geöffnet und geschlossen. Über die Reibkupplung K1 werden vzw. die Gänge 1, 3 und 5 und der Rückwärtsgang geschaltet. Die Gänge 2, 4 und 6 können dann über die Lamellenkupplung K2 geschaltet sein. Durch das Schließen der jeweiligen Reibkupplung K1 oder K2 wird das Drehmoment auf den Innenlamellenträger 9 oder 11 übertragen und dann auf das entsprechende Verbindungselement 4 oder 5 der jeweiligen Getriebeeingangswelle weitergeleitet.

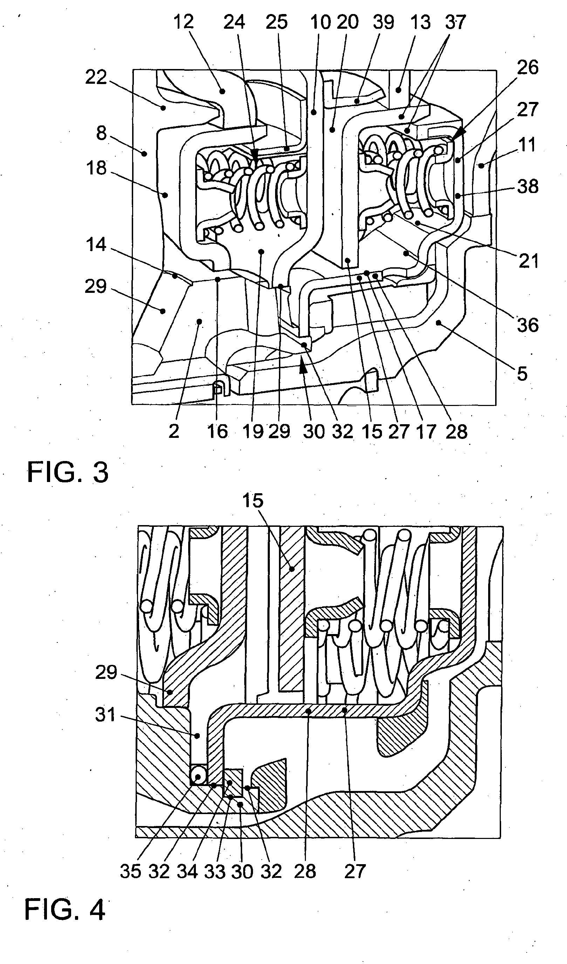

Zur Betätigung der beiden Reibkupplungen K1 und K2 ist jeder der Reibkupplungen K1 und K2 jeweils ein Betätigungskolben zugeordnet. Der ersten Reibkupplung K1 ist ein erster Betätigungskolben 12 zugeordnet. Der zweiten Reibkupplung K2 ist ein zweiter Betätigungskolben 13 zugeordnet. Die beiden Betätigungskolben 12 und 13 sind derart axial verschieblich ausgestaltet und angeordnet, dass mit dem Betätigungskolben 12 und 13 das jeweilige Lamellenpaket der Reibkupplung K1 bzw. K2 zusammendrückbar ist. Die Betätigungskolben 12 und 13 weisen jeweils einen radial innersten Fußbereich auf. Der erste Betätigungskolben 12 weist einen Fußbereich 14 auf, mit dem dieser radial innen an der Hauptnabe 2 abgestützt ist, wie dies insbesondere in Fig. 3 dargestellt ist. Der zweite Betätigungskolben 13 weist einen Fußbereich 15 auf. Die beiden Fußbereiche 14 und 15 gleiten bei der Betätigung des jeweiligen Betätigungskolbens 12 bzw. 13 entlang jeweils einer Dichtungslauffläche 16 bzw. 17.

Die Fußbereiche 14 und 15 tragen dabei jeweils eine nicht näher bezeichnete Dichtlippe, wobei die Dichtlippen mit den Dichtungslaufflächen 16 und 17 zusammenwirken. Die Betätigungskolben 12 und 13 sind hier radial zweiteilig ausgeführt, nämlich mit einem radial äußeren Teil und einem radial inneren Teil, wobei diese beiden Teile hier nicht gesondert bezeichnet sind.

Dem ersten Betätigungskolben 12 ist getriebeseitig ein Arbeitsraum 18 und motorseitig ein Druckausgleichsraum 19 zugeordnet, um den ersten Betätigungskolben 12 axial zu verschieben. Dem zweiten Betätiguhgskolben 13 ist einerseits, d. h. hier getriebeseitig ein entsprechender Arbeitsraum 20 zugeordnet und motorseitig, d. h. hier motorseitig ein Druckausgleichsraum 21 zugeordnet. Der erste Arbeitsraum 18 ist durch den Kragen 8, einen am Kragen 8 einstückig ausgebildeten Dichtvorsprung 22 und das innere Teil des Betätigungskolbens 12 sowie den Grundkörper der Hauptnabe 2 begrenzt. Das innere Teil des Betätigungskolbens 12 ist dabei an dem Dichtvorsprung 22 mit einer nicht näher bezeichneten Dichtung abdichtend geführt.

In den ersten Arbeitsraum 18 mündet eine Druckmittelleitung 23. Durch die Druckmittelleitung 23 ist ein Druckmittel, vzw. Öl, in den ersten Arbeitsraum 18 pressbar, wodurch der Betätigungskolben 12 verschoben wird und das Lamellenpaket der Reibkupplung K1 zusammendrückt wird.. Das Drehmoment wird dann über das Lamellenpaket auf den ersten Innenlamellenträger 9 und die entsprechende Antriebswelle übertragen. Im Druckausgleichsraum 19 ist eine Federanordnung 24 axial abgestützt, so dass die Federanordnung 24 - nach dem Betätigen der Reibkupplung K1 - den ersten Betätigungskolben 12 in seine Ausgangslage zurückschieben kann. Der Druckausgleichsraum 19 ist zum einen durch das innere Teil des Betätigungskolbens 12, die Dichtungsgleitfläche 16 der Hauptnabe 2 sowie den zweiten Außenlamellenträger 10 begrenzt. Am zweiten Außenlamellenträger 10 ist eine erste Dichthülse 25 angeordnet, die mit dem inneren Teil des Betätigungskolbens 12 abdichtend zusammenwirkt. Die Federanordnung 24 ist einerseits am inneren Teil des Betätigungskolbens 12 und andererseits am zweiten Außenlamellenträger 10 abgestützt. Dem Druckausgleichsraum 19 ist ebenfalls das Druckmittel zuführbar, so dass das in dem Druckausgleichsraum 19 befindliche Druckmittel eine fliehkraftbedingte Drucküberhöhung im Arbeitsraum 18 ausgleichen kann.

Der zweite Arbeitsraum 20 hat denselben Zweck wie der Arbeitsraum 18, nur für die zweite Reibkupplung K2. Im zweiten Druckausgleichsraum 21 ist entsprechend eine sich axial abstützende Federanordnung 26 angeordnet. Der der zweiten Reibkupplung K2 zugeordnete Druckausgleichsraum 21 ist zumindest teilweise durch einen Ausgleichskolben 27 begrenzt. Der Ausgleichskolben 27 ist an der Hauptnabe 2 befestigt, vzw. angeschweißt - ebenso wie der zweite Außenlamellenträger 10, wie es bereits beschrieben wurde.

Die eingangs beschriebenen Nachteile sind nun dadurch vermieden, dass der Ausgleichskolben 27 einen sich in axialer Richtung erstreckenden Axialbereich 28 aufweist, wobei der Axialbereich 28 die Dichtungslauffläche 17 für den Fußbereich 15 des Betätigungskolbens 13 der zweiten Reibkupplung K2 aufweist.

Dies hat den Vorteil, dass die Hauptnabe 2 im Wesentlichen motorseitig, nach dem Schweißnahtbereich des zweiten Außenlamellenträgers 10 endend ausführbar ist. Hierdurch wiederum reduziert sich der Bohraufwand für die nicht dargestellten, in den zweiten Arbeitsraum 20 mündenden Druckmittelleitungen an der Hauptnabe 2. Ferner ist durch diese verkürzte Bauform der Hauptnabe 2 Material einsparbar. Ein wesentlicher weiterer Vorteil ist, dass beide Schweißnähte, d. h. die Schweißnaht des zweiten Außenlamellenträgers 10 und des Ausgleichskolbens 27 mit der Hauptnabe 2 gut axial zugänglich sind, insbesondere axial verschweißbar sind und die Schweißnahtumgebung durch die Bereitstellung des durch die Verkürzung geschaffenen Freiraumes gut gereinigt, d. h. gebürstet werden können. Zusätzlich ist die Dichtungslauffläche 17 beim Schweißen des zweiten Außenlamellenträgers 10 an der Hauptnabe 2 geschützt, da der Ausgleichskolben 27 mit der Dichtungsgleitfläche 17 erst später montiert, d. h. verschweißt wird.

Die Hauptnabe 2 weist an ihrem motorseitigen, nicht näher bezeichneten Ende, einen ersten, sich im wesentlichen in Axialrichtung erstreckenden Außenumfangsabschnitt 29 auf, wobei am Außenumfangsabschnitt 29 der der zweiten Reibkupplung K2 zugeordnete Außenlamellenträger 10 axial angeschweißt ist. Die Hauptnabe 2 ragt über den Außenlamellenträger 10 nur mit einem Endstummel 30 hervor. Motorseitig an den ersten Außenumfangsabschnitt 29 schließt sich ein steil nach innen abfallender Druckraumabschnitt 31 an. Der Druckraumabschnitt 31 bildet einen Teil des Endstummels 30 (der auch als sich axial erstreckende "Kragen" bezeichenbar ist). Der Druckraumabschnitt 31 weist vzw. zumindest eine in den Arbeitsraum 20 der zweiten Reibkupplung K2 mündende Druckmittelleitung mit einer entsprechenden Druckmittelaustrittsöffnung auf (nicht dargestellt). Die Hauptnabe 2 weist am Endstummel 30 einen zweiten Außenumfangsabschnitt 32 auf, wobei der zweite Außenumfangsabschnitt 32 das Ende der Hauptnabe 2 bildet und auf dem zweiten Außenumfangsabschnitt 32 ist der Ausgleichskolben 27 befestigt, nämlich vzw. angeschweißt. Der Endstummel 30 wird hier durch den Druckraumabschnitt 31 und den zweiten Außenumfangsabschnitt 32 gebildet.

Fig. 4 zeigt eine alternative, nicht erfindungsgemäße Ausführung. Hier wird der Endstummel 30 ebenfalls von einem Druckraumabschnitt 31 und einem sich daran anschließenden Außenumfangsabschnitt 32 gebildet, wobei der Außenumfangsabschnitt 32 jedoch eine Ringnut 33 aufweist. In die Ringnut 33 ist ein Sicherungsring 34 eingesetzt, mit dem der Ausgleichskolben 27 am Außenumfangsabschnitt 32 befestigt ist. Zwischen dem steil abfallenden Druckraumabschnitt 31, der hier im Wesentlichen radial abfällt, und dem inneren ebenfalls hier im Wesentlichen radialen Bereich des Ausgleichskolbens 27 ist eine Dichtung 35, vzw. in Form eines O-Rings, am zweiten Außenumfangsabschnitt 32 angeordnet.

Fig. 2 und 3 zeigen ferner, dass der Ausgleichskolben 27 einen in den Druckausgleichsraum 21 mündenden Druckmitteldurchgang 36 aufweist, wobei der Druckmitteldurchgang 36 hier im Axialbereich 28 des Ausgleichkolbens 27 ausgebildet ist.

Der Ausgleichskolben 27 wirkt mit dem Betätigungskolben 13 zusammen. Dazu weist der Ausgleichskolben 27 eine nicht näher bezeichnete Dichtung auf, und der Betätigungskolben 13 weist einen gekröpften Bereich 37, insbesondere an seinem inneren Teil auf, wobei die Dichtung den Druckausgleichsraum 21 am gekröpften Bereich 37 abdichtet. Die Federanordnung 26 im zweiten Druckausgleichsraum 21 stützt sich an einen im Wesentlichen in Radialrichtung erstreckenden Bodenbereich 38 des Ausgleichskolbens 27 ab.

Am zweiten Außenlamellenträger 10 ist ferner eine zweite Dichthülse 39 angeordnet, wobei der gekröpfte Bereich 37 des zweiten Betätigungskolbens 13 mit der zweiten Dichthülse 39 den zweiten Arbeitsraum 20 abdichtet. Der zweite Arbeitsraum 20 ist durch den Druckraumabschnitt 31 der Hauptnabe 2, den zweiten Außenlamellenträger 10, die am zweiten Außenlamellenträger 10 angeordnete zweite Dichthülse 39, den an der zweiten Dichthülse 39 abdichtend geführte Betätigungskolben 13 und den an der Hauptnabe befestigten Ausgleichskolben 19 begrenzt.

### Bezugszeichenliste

- 1: Doppelkupplung
- 2: Hauptnabe
- 3: Kupplungseinganswelle
- 4: Verbindungselement
- 5: Verbindungselement
- 6: Mitnehmerscheibe
- 7: erster Außenlamellenträger
- 8: Kragen
- 9: erster Innenlamellenträger
- 10: zweiter Außenlamellenträger
- 11: zweiter Innenlamellenträger
- 12: erster Betätigungskolben
- 13: zweiter Betätigungskolben
- 14: Fußbereich
- 15: Fußbereich
- 16: Dichtungslauffläche
- 17: Dichtungslauffläche
- 18: erster Arbeitsraum
- 19: erster Druckausgleichsraum
- 20: zweiter Arbeitsraum
- 21: zweiter Druckausgleichsraum
- 22: Dichtvorsprung
- 23: Druckmittelleitung
- 24: Federanordnung
- 25: Dichthülse
- 26: Federanordnung
- 27: Ausgleichskolben
- 28: Axialbereich
- 29: erster Außenumfangsabschnitt
- 30: Endstummel
- 31: Druckraumabschnitt
- 32: zweiter Außenumfangsabschnitt
- 33: Ringnut
- 34: Sicherungsring
- 35: Dichtung
- 36: Druckmitteldurchgang
- 37: gekröpfter Bereich
- 38: Bodenbereich
- 39: Dichthülse

## Patentansprüche

1. Doppelkupplung (1), insbesondere für ein automatisches oder automatisiertes Doppelkupplungsgetriebe, mit einer Hauptnabe (2), sowie mit einer ersten Reibkupplung (K1) und mit einer zweiten Reibkupplung (K2), wobei die beiden Reibkupplungen (K1, K2) einerseits mit einer Motorwelle und andererseits jeweils mit einer Getriebeeingangswelle verbindbar oder verbunden sind, wobei den beiden Reibkupplungen (K1, K2) jeweils ein Betätigungskolben (12, 13) zugeordnet ist, und die Betätigungskolben (12, 13) mit ihrem radial innenliegenden Fußbereichen (14, 15) entlang jeweils einer Dichtungslauffläche (16, 17) axial verschiebbar sind und den Betätigungskolben (12, 13) jeweils einerseits ein Arbeitsraum (18, 20) und andererseits ein Druckausgleichsraum (19, 21) zugeordnet ist, wobei der der zweiten Reibkupplung (K2) zugeordnete Druckausgleichsraum (21) zumindest teilweise durch einen Ausgleichskolben (27) begrenzt ist, wobei der Ausgleichskolben (27) einen sich in axialer Richtung erstreckenden Axialbereich (28) aufweist, wobei der Axialbereich (28) die Dichtungslauffläche (17) für den Fußbereich (15) des Betätigungskolbens (13) der zweiten Reibkupplung (K2) aufweist, **dadurch gekennzeichnet, dass** die Hauptnabe (2) nahe an ihrem motorseitigem Ende eine sich im Wesentlichen in Axialrichtung erstreckenden, ersten Außenumfangsabschnitt (29) aufweist, wobei an dem ersten Außenumfangsabschnitt (29) ein der zweiten Reibkupplung (K2) zugeordneter Außenlamellenträger (10) axial angeschweißt ist, dass die Hauptnabe (2) über den ersten Außenumfangsabschnitt (29) nur mit einem Endstummel (30) in axialer Richtung hervorragt und dass die Hauptnabe (2) an ihrem Endstummel (30) einen zweiten Außenumfangsabschnitt (32) aufweist, wobei am zweiten Außenumfangsabschnitt (32) der Ausgleichskolben (27) angeordnet ist, wobei der Ausgleichskolben (27) am zweiten Außenumfangsabschnitt (32) verschweißt ist.

2. Doppelkupplung nach Anspruch 1, **dadurch gekennzeichnet, dass** die Hauptnabe (2) einen vzw. sich motorseitig an den ersten Außenumfangsabschnitt (29) anschließenden, insbesondere steil nach innen abfallenden Druckraumabschnitt (31) aufweist, wobei der Druckraumabschnitt (31) zumindest eine in den Arbeitsraum (20) der zweiten Reibkupplung (K2) mündende Druckmittelaustrittsöffnung aufweist.

3. Doppelkupplung nach einem der vorstehenden Ansprüche, **dadurch gekennzeichnet, dass** der Ausgleichskolben (27) ein in den Druckausgleichsraum (21) der zweiten Reibkupplung (K2) mündenden Druckmitteldurchgang (36) aufweist, wobei der Druckmitteldurchgang vzw. im Axialbereich (28) ausgebildet ist.

4. Doppelkupplung nach einem der vorstehenden Ansprüche, **dadurch gekennzeichnet, dass** der Ausgleichskolben (27) mit einer Dichtung versehen ist, wobei die Dichtung den zweiten Druckausgleichsräumen (21) an einem gekröpften Bereich (37) abdichtet.

5. Doppelkupplung nach einem der vorstehenden Ansprüche, **dadurch gekennzeichnet, dass** der zweite Druckausgleichsraum (21) eine sich an dem Betätigungskolben (13) und dem Ausgleichskolben (27) abstützende Federanordnung (26) aufweist, wobei die Federanordnung (26) sich an einem in wesentlichen in Radialrichtung erstreckenden Bodenbereich (38) des Ausgleichskolbens (27) abstützt.

6. Doppelkupplung nach einem der vorstehenden Ansprüche, **dadurch gekennzeichnet, dass** am zweiten Außenlamellenträger (10) eine Dichthülse (39) angeordnet ist, wobei die Dichthülse (39) mit dem gekröpften Bereich (37) des Betätigungskolbens (13) abdichtend zusammenwirkt.

7. Doppelkupplung nach einem der vorstehenden Ansprüche, **dadurch gekennzeichnet, dass** der zweite Arbeitsraum (20) durch den Druckraumabschnitt (31) der Hauptnabe (2) den zweiten Außenlamellenträger (10), die am zweiten Außenlamellenträger (10) angeordnete Dichthülse (39), den an der Dichthülse (39) abdichtend geführten Betätigungskolben (13) und den an der Hauptnabe (2) befestigten Ausgleichskolben (27) begrenzt ist.

## Claims

1. Dual clutch (1), in particular for an automatic or automated dual-clutch gearbox, having a main hub (2) and having a first friction clutch (K1) and having a second friction clutch (K2), wherein the two friction clutches (K1, K2) are connectable or connected at one side to an engine shaft and at the other side to a respective gearbox input shaft, wherein the two friction clutches (K1, K2) are assigned a respective actuating piston (12, 13), and the actuating pistons (12, 13) are axially displaceable by way of their foot regions (14, 15), situated radially at the inside, along a respective seal running surface (16, 17), and the actuating pistons (12, 13) are each assigned, at one side, a working chamber (18, 20) and, at the other side, a pressure compensation chamber (19, 21), wherein the pressure compensation chamber (21) assigned to the second friction clutch (K2) is delimited at least partially by a compensation piston (27), wherein the compensation piston (27) has an axial region (28) extending in an axial direction, wherein the axial region (28) has the seal running surface (17) for the foot region (15) of the actuating piston (13) of the second friction clutch (K2), **characterized in that** the main hub has, close to its engine-side end, a first outer circumferential section (29) extending substantially in the axial direction, wherein an outer plate carrier (10) assigned to the second friction clutch (K2) is welded axially to the first outer circumferential section (29), **in that** the main hub (2) projects beyond the first outer circumferential section (29) in an axial direction only by way of an end stub (30), and **in that** the main hub (2) has a second outer circumferential section (32) on its end stub (30), wherein the compensation piston (27) is arranged on the second outer circumferential section (32), wherein the compensation piston (27) is welded to the second outer circumferential section (32).

2. Dual clutch according to Claim 1, **characterized in that** the main hub (2) has a pressure chamber section (31) which preferably adjoins the first outer circumferential section (29) at the engine side and which in particular slopes down steeply inward, wherein the pressure chamber section (31) has at least one pressure medium outlet opening which issues into the working chamber (20) of the second friction clutch (K2).

3. Dual clutch according to one of the preceding claims, **characterized in that** the compensation piston (27) has a pressure medium passage (36) which issues into the pressure compensation chamber (21) of the second friction clutch (K2), wherein the pressure medium passage is preferably formed in the axial region (28).

4. Dual clutch according to one of the preceding claims, **characterized in that** the compensation piston (27) is equipped with a seal, wherein the seal seals off the second pressure compensation chambers (21) at a cranked region (37).

5. Dual clutch according to one of the preceding claims, **characterized in that** the second pressure compensation chamber (21) has a spring arrangement (26) which is supported on the actuating piston (13) and on the compensation piston (27), wherein the spring arrangement (26) is supported on a base region (38), which extends substantially in the radial direction, of the compensation piston (27).

6. Dual clutch according to one of the preceding claims, **characterized in that** a sealing sleeve (39) is arranged on the second outer plate carrier (10), wherein the sealing sleeve (39) interacts sealingly with the cranked region (37) of the actuating piston (13).

7. Dual clutch according to one of the preceding claims, **characterized in that** the second working chamber (20) is delimited by the pressure chamber section (31) of the main hub (2), by the second outer plate carrier (10), by the sealing sleeve (39) arranged on the second outer plate carrier (10), by the actuating piston (13) which is guided sealingly on the sealing sleeve (39), and by the compensation piston (27) fastened to the main hub (2).

## Revendications

1. Double embrayage (1), en particulier pour une boîte de vitesses à double embrayage automatique ou automatisée, comprenant un moyeu principal (2) ainsi qu'un premier embrayage à friction (K1) et un deuxième embrayage à friction (K2), les deux embrayages à friction (K1, K2) pouvant être connectés ou étant connectés d'une part à un arbre de moteur et d'autre part à chaque fois à un arbre d'entrée de boîte de vitesses, un piston d'actionnement (12, 13) étant à chaque fois associé aux deux embrayages à friction (K1, K2), et les pistons d'actionnement (12, 13) étant déplaçables axialement avec leurs régions de base situées radialement à l'intérieur (14, 15) le long d'une surface de roulement de joint d'étanchéité respective (16, 17) et un espace de travail (18, 20) d'une part, et un espace d'équilibrage de pression (19, 21) d'autre part, étant à chaque fois associés aux pistons d'actionnement (12, 13), l'espace d'équilibrage de pression (21) associé au deuxième embrayage à friction (K2) étant limité au moins en partie par un piston d'équilibrage (27), le piston d'équilibrage (27) présentant une région axiale (28) s'étendant dans la direction axiale, la région axiale (28) présentant la surface de roulement de joint d'étanchéité (17) pour la région de base (15) du piston d'actionnement (13) du deuxième embrayage à friction (K2), **caractérisé en ce que** le moyeu principal (2) présente, à proximité de son extrémité du côté du moteur, une première section périphérique extérieure (29) s'étendant essentiellement dans la direction axiale, un support de disque extérieur (10) associé au deuxième embrayage à friction (K2) étant soudé axialement à la première portion périphérique extérieure (29), **en ce que** le moyeu principal (2) fait saillie dans la direction axiale au-delà de la première portion périphérique extérieure (29) seulement avec un tronçon d'extrémité (30) et **en ce que** le moyeu principal (2) présente au niveau de son tronçon d'extrémité (30) une deuxième portion périphérique extérieure (32), le piston d'équilibrage (27) étant disposé au niveau de la deuxième portion périphérique extérieure (32), le piston d'équilibrage (27) étant soudé à la deuxième portion périphérique extérieure (32).

2. Double embrayage selon la revendication 1, **caractérisé en ce que** le moyeu principal (2) présente une portion d'espace de pression (31) se raccordant de préférence du côté du moteur à la première portion périphérique extérieure (29), en particulier descendant fortement vers l'intérieur, la portion d'espace de pression (31) présentant au moins une ouverture de sortie de fluide sous pression débouchant dans l'espace de travail (20) du deuxième embrayage à friction (K2).

3. Double embrayage selon l'une quelconque des revendications précédentes, **caractérisé en ce que** le piston d'équilibrage (27) présente un passage de fluide sous pression (36) débouchant dans l'espace d'équilibrage de pression (21) du deuxième embrayage à friction (K2), le passage de fluide sous pression étant réalisé de préférence dans la région axiale (28).

4. Double embrayage selon l'une quelconque des revendications précédentes, **caractérisé en ce que** le piston d'équilibrage (27) est pourvu d'un joint d'étanchéité, le joint d'étanchéité étanchéifiant le deuxième espace d'équilibrage de pression (21) au niveau d'une région coudée (37).

5. Double embrayage selon l'une quelconque des revendications précédentes, **caractérisé en ce que** le deuxième espace d'équilibrage de pression (21) présente un agencement de ressort (26) s'appuyant contre le piston d'actionnement (13) et le piston d'équilibrage (27), l'agencement de ressort (26) s'appuyant au niveau d'une région de fond (38) du piston d'équilibrage (27) s'étendant essentiellement dans la direction radiale.

6. Double embrayage selon l'une quelconque des revendications précédentes, **caractérisé en ce qu'**une douille d'étanchéité (39) est disposée au niveau du deuxième support de disque extérieur (10), la douille d'étanchéité (39) coopérant de manière hermétique avec la région coudée (37) du piston d'actionnement (13).

7. Double embrayage selon l'une quelconque des revendications précédentes, **caractérisé en ce que** le deuxième espace de travail (20) est limité par la portion d'espace de pression (31) du moyeu principal (2), le deuxième support de disque extérieur (10), la douille d'étanchéité (39) disposée au niveau du deuxième support de disque extérieur (10), le piston d'actionnement (13) guidé de manière hermétique au niveau de la douille d'étanchéité (39) et le piston d'équilibrage (27) fixé au moyeu principal (2).
